# EUROPÄISCHE PATENTSCHRIFT

(11) **EP 0 687 603 B1**
(45) Veröffentlichungstag und Bekanntmachung des Hinweises auf die Patenterteilung: **02.09.1998**
(21) Anmeldenummer: 95108933.3
(22) Anmeldetag: 09.06.1995
(51) Int. Cl.: B60R 22/347, B60R 22/42, B60R 22/10

(54) **Kinderrückhaltesystem**
Child restraint system
Système de retenue pour enfants

(30) Priorität: 13.06.1994 DE 4420457
(43) Veröffentlichungstag der Anmeldung: 20.12.1995
(73) Patentinhaber: Van Riesen GmbH u. Co. KG, D-32130 Enger (DE)
(72) Erfinder: Friedrich, Matthias, D-32130 Enger (DE); Wölfl, Volkmar, D-32602 Vlotho-Valdorf (DE)
(74) Vertreter: Vollmann, Heiko, Dipl.-Ing.

(56) Entgegenhaltungen:
- EP-A- 0 295 838
- DE-A- 1 456 116

## Beschreibung

Die Erfindung betrifft ein Kinderrückhaltesystem mit den im Oberbegriff des Patentanspruchs 1 aufgeführten Merkmalen.

Derartige Kinderrückhaltesysteme sind in zahlreichen Varianten erhältlich. Sie bestehen im wesentlichen aus einem Kindersitz, der entweder direkt oder über ein Gestell mit dem im Fahrzeug vorhandenen Dreipunkt- oder Zweipunktsicherheitsgurt auf dem Sitz befestigt wird. Zur Sicherung des Kindes innerhalb des Sitzes ist ein Mehrpunktgurtsystem vorgesehen, in der Regel ein Vier- oder Fünfpunktgurtsystem.

Zwar sind solche Kinderrückhaltesysteme in Gruppen unterteilt, wobei jede Gruppe einem bestimmten Größen- bzw. Gewichtsbereich zugeordnet ist, doch müssen trotz dieser Unterteilung immense Größenunterschiede zuverlässig überbrückt werden, was im wesentlichen durch Anpassung der wirksamen Gurtbandlängen erfolgen muß. So sind beispielsweise Kinderrückhaltesysteme mit Vierpunktgurten bekannt, bei denen ein Beckengurt sowie zwei Schultergurte in einem gemeinsamen zentralen Schloß miteinander verbindbar sind. Sowohl an den Schultergurten als auch am Beckengurt müssen Gurtbandlängeneinstelleinrichtungen vorgesehen sein. In einfachster Form bestehen diese aus reibungserhöhenden Umlenksystemen, welche oft schwierig zu verstellen sind. Dies führt dazu, daß die für die Sicherheitsfunktion unbedingt erforderliche Anpassung der wirksamen Gurtbandlängen an die durch die Größe des Kindes bestimmten Erfordernisse häufig nicht oder zumindest nicht in der erforderlichen Weise erfolgen.

Aus der EP-B-0 261 453 (B1) ist eine Vorrichtung zum Einstellen der Gurtbandlänge eines Gurtbandsicherheitssystems bekannt, bei der nach Betätigung einer Freigabesteuerung Gurtband entgegen Federkraft von einer Gurtbandrolle zur Verlängerung der wirksamen Gurtbandlänge abgewickelt werden kann. Bei Nichtbetätigung ist die Rolle festgesetzt und damit die wirksame Gurtbandlänge festgelegt. Derartige Gurtbandlängeneinstelleinrichtungen werden beispielsweise bei dem vorbeschriebenen Kinderrückhaltesystem mit Vierpunktgurt für die Schultergurte eingesetzt. Dabei ist die bestimmungsgemäße Verwendung so, daß vor dem Anlegen die wirksame Gurtbandlänge vergrößert wird und durch erneutes Betätigen der Freigabesteuerung nach dem Anlegen durch Federkraft die Gurtbandrolle solange selbsttätig aufwickelt, bis eine durch die Federkraft bestimmte Haltekraft erreicht ist. Diese Kraft ist so gewählt, daß dann in der Regel die wirksame Gurtbandlänge gerade richtig bemessen ist.

Derartige Gurtbandlängeneinstelleinrichtungen haben sich zwar in der Praxis bewährt, doch wird es nach wie vor als nachteilig empfunden, daß jeder der Schultergurte mit einer gesonderten Gurtbandlängeneinstelleinrichtung versehen werden muß und daß aufgrund ihrer freien Lage die Gefahr besteht, daß sie durch das Kind selbst betätigt werden, was zur unbeabsichtigten Verlängerung des wirksamen Gurtbandes führen kann. Ein weiterer Nachteil besteht darin, daß aufgrund des formschlüssigen Sperrens der Drehbewegung der Rolle diese zwar zuverlässig festgelegt wird, der Restschlupf, um den der Wickel trotz feststehender Rolle jedoch gelenkt werden kann, abhängig von der Menge des aufgewickelten Gurtbandes ist. So ist das System bei einer fast voll aufgewickelten Gurtbandrolle weich im Vergleich zum System bei abgewickelter Gurtbandrolle.

Es sind auch Kinderrückhaltesysteme bekannt, bei denen die wirksame Gurtbandlänge sämtlicher Gurte mittels eines Zentralverstellers erfolgt.

Aus der gattungsbildenden DE-A-3 615 443 ist ein Kinderrückhaltesystem mit einem unterhalb des Sitzes angeordneten Zentralversteller bekannt, bei dem zwar der Gurt zentral mittels einer federkraftbeaufschlagten Rolle aufgewickelt und gespannt wird, doch das Festlegen des Gurtes durch mechanisches Verriegeln der Rolle erfolgt. Dies führt insbesondere bei aufgewickelter Rolle dazu, daß im Belastungsfall Schlupf entsteht, wenn der auf der festgesetzten Rolle aufgewickelte Gurt durch erhöhte Krafteinwirkung gespannt und damit enger gewickelt wird. Dies stellt ein erhöhtes Sicherheitsrisiko dar, da es gerade für den Belastungsfall darauf ankommt, daß der Gurt möglichst eng am Körper anliegt. Gleiches gilt für das aus EP-A-0 295 838 bekannte Kinderrückhaltesystem mit Zentralversteller.

Aus der DE-A-14 56 116 ist zwar eine Klemmvorrichtung für ein durchlaufendes Gurtband bekannt, das diese Nachteile vermeidet, doch ist die dort dargestellte Ausführung zum einen für den stationären Einbau im Kraftfahrzeug vorgesehen und zum anderen im Aufbau vergleichsweise kompliziert und aufwendig. Darüberhinaus weist die Klemmeinrichtung eine schwenkbar gelagerte Klemmbacke auf, welche aus Sicherheitsgründen lageorientiert eingebaut werden sollte und im übrigen beim Ausschwenken einen erheblichen Freiraum benötigt, so daß schon aus diesem Grunde eine Anwendung in dem eng begrenzten Freiraum eines Aufsatzkindersitzes nicht zweckmäßig wäre.

Ausgehend von dem vorgenannten Stand der Technik gemäß DE-A-3 615 443 liegt der vorliegenden Erfindung die Aufgabe zugrunde, ein gattungsgemäßes Kinderrückhaltesystem so auszubilden, daß zwar einerseits eine zuverlässige und reproduzierbare Einstellung der wirksamen Gurtbandlänge erfolgt, andererseits aber der vorerwähnte Schlupf im Belastungsfalle wirksam vermieden wird. Des weiteren soll ein so ausgestaltetes Kinderrückhaltesystem kostengünstig in der Herstellung und zuverlässig in der Handhabung sein.

Diese Aufgabe wird gemäß der Erfindung durch die im kennzeichnenden Teil des Patentanspruches 1 aufgeführten Merkmale gelöst.

Gemäß der Erfindung wird bei der Gurtbandlängeneinstelleinrichtung nicht die Gurtbandwickelrolle blockierbar ausgebildet, sondern in Abwickelrichtung hinter der Gurtbandwickelrolle eine Blockiereinrichtung für das hindurch geführte Gurtband vorgesehen. Diese Ausbildung verhindert zum einen wirksam Schlupf des Gurtbandes im Belastungsfall und vereinfacht zum anderen die Konstruktion der Gurtbandlängeneinstelleinrichtung erheblich, da die Gurtbandwickelrolle und die zugehörige Lagerung lediglich für die Aufwickelkraft, nicht jedoch für die im Belastungsfall auftretende Kraft ausgelegt werden muß. Die Blockiereinrichtung hingegen kann vergleichsweise einfach aufgebaut sein, da lediglich die schlupffreie Blockierfunktion zu gewährleisten ist. Da die Blockiereinrichtung nicht die Gurtbandwickelrolle, sondern das Gurtband selbst blockiert, ist unabhängig von der Wickellage stets dieselbe schlupffreie Haltekraft gewährleistet. Die erfindungsgemäße Lösung vereint somit die Vorteile einer federvorgespannten Gurtbandlängeneinstelleinrichtung und vermeidet die eingangs geschilderten Nachteile des Schlupfes. Das Spannen des Gurtsystems erfolgt nach Auslösung der Freigabesteuerung stets mit etwa der gleichen Kraft, so daß bei entsprechender Auslegung des Gurtsystems stets ein sicherer, optimaler Sitz desselben gewährleistet ist, unabhängig von der Größe des Kindes oder der Art der Kleidung. Die hierzu erforderliche Federspannkraft wird im Falle einer erforderlichen Längenänderung dadurch erzeugt, daß vor dem Anschnallen nach Betätigung der Freigabesteuerung Gurtband aus der Gurtbandlängeneinstelleinrichtung entgegen Federkraft gezogen wird. Diese in der Feder gespeicherte Energie steht dann beim Betätigen der Freigabesteuerung nach dem Anlegen des Gurtsystems zum gezielten Straffen zur Verfügung. Es kann also bei geeigneter Auslegung des Gurtsystems auf eine manuelle Anpassung der wirksamen Gurtbandlänge vollständig verzichtet werden, so daß im Idealfall nach Betätigung nur einer Auslösetaste das gesamte Gurtsystem in seiner bestimmungsgemäßen optimalen Lage ist.

Eine im Aufbau einfache und zuverlässig arbeitende Bauform ergibt sich dadurch, daß ein U-förmiger Tragkörper vorgesehen ist, der am Sitz oder Sitzgestell festgelegt wird und in dem die Gurtbandwickelrolle gelagert sowie die Blockiereinrichtung sitzt. So können in diesem U-Profil Klemmbacken angeordnet werden, von denen eine durch entsprechende Ausbildung der Aussparung beweglich gelagert ist. Ein die Schenkel dieses U-Profils übergreifendes Bauteil, das verschiebbar auf dem U-Profil geführt ist, nimmt dann diese bewegliche Klemmbacke sowie eine diese kraftbeaufschlagende Achse auf, auf der eine Umlenkrolle für das Gurtband gelagert ist. Auf diese Weise kann die im Belastungsfall auftretende Verstärkung der Klemmwirkung einfach und kostengünstig realisiert werden. Im übrigen ist das den Tragkörper übergreifende Bauteil begrenzt beweglich darauf angeordnet und vorzugsweise derart federkraftbeaufschlagt, daß die bewegliche Klemmbacke bei Nichtbetätigung der Freigabestellung in Klemmstellung befindlich ist. Durch Anordnung einer Betätigungstaste oder eines Betätigungshebels auf diesem übergreifenden Bauteil kann dann die Betätigung für die Freigabesteuerung realisiert werden.

Eine solche Baueinheit ist kostengünstig herzustellen sowie zuverlässig und sicher in der Anwendung.

Die Blockiereinrichtung ist gemäß der Erfindung als Klemmeinrichtung ausgelegt, und zwar derart, daß die mindesterforderliche Klemmwirkung vorzugsweise durch Federkraft aufgebracht wird, eine Klemmbacke jedoch so angeordnet ist, daß sie im Belastungsfalle zusätzlich durch die belastende Kraft in Klemmrichtung beaufschlagt wird. Dies wird durch geeignete Gurtbandführung erreicht, indem eine Umlenkrolle vorgesehen wird, deren Achse diese Klemmbacke in Klemmrichtung im Belastungsfall kraftbeaufschlagt.

Von besonderem Vorteil ist dabei, daß die Gurtbandlängeneinstelleinrichtung für das Kind unzugänglich an der Rück- oder Unterseite des Sitzes liegt, so daß Manipulationen daran auszuschließen sind. Lediglich die Betätigungsmittel für die Freigabesteuerung sind von vorne oder seitlich zugänglich, vorzugsweise jedoch so angeordnet, daß das angeschnallte Kind selbst diese nicht erreichen kann. Dies kann beispielsweise dadurch realisiert werden, daß die Betätigungsmittel eine entsprechende Taste jenseits des vorderen unteren Sitzbereichs aufweisen, die so geordnet ist, daß sie durch eine entsprechende Aussparung zugänglich ist.

Um eine Zentralverstellung der Schultergurte mit nur einer Gurtbandlängeneinstelleinrichtung zu ermöglichen, ist es von Vorteil, diese rückseitig des Sitzes, vorzugsweise mittels eines Knotenbleches, zu einem gemeinsamen Gurtband zusammenzuführen und dann dieses gemeinsame Gurtband der Gurtbandlängeneinstelleinrichtung zuzuführen. Hierdurch wird zugleich auch gewährleistet, daß beide Schultergurte gleich lang sind, was für die Sicherheit des Systems wichtig ist.

Bevorzugt werden dann nicht gesonderte Beckengurte eingesetzt, sondern die Schultergurte über ein zentrales Gurtschloß oder auch andere Umlenkmittel in die Beckengurte umgelenkt. Die freien Enden der Beckengurte sind dann am Sitz festgelegt oder miteinander unter dem Sitz verbunden, so daß über die Längenverstellung der Schultergurte gleichzeitig auf eine Längenverstellung der Beckengurte erfolgen kann. Auf diese Weise wird eine Zentralverstellung möglich, die, sofern erforderlich, durch beispielsweise entsprechende Umlenksysteme im Beckenbereich hinsichtlich der Spannkräfte noch gezielt beeinflußt werden kann. Derartige flaschenzugähnliche Systeme sind bekannt.

Bevorzugt ist die erfindungsgemäße Gurtbandlängeneinstelleinrichtung mit der Freigabesteuerung und den zugehörigen Betätigungsmitteln, beispielsweise einer Auslösetaste, als Baueinheit ausgebildet, die dann im wesentlichen unabhängig von der individuellen Sitzkonstruktion ist und gegebenenfalls auch nachgerüstet werden kann. Eine solche Ausführung hat insbesondere auch konstruktive Vorteile, da die Betätigungsmittel unmittelbar der Betätigungseinrichtung zugeordnet werden können.

Je nach Art und Ausbildung des Kinderrückhaltesystems, insbesondere auch des Sitzes kann es zweckmäßig sein, die Gurtbandlängeneinstelleinrichtung in zwei Baueinheiten zu unterteilen, nämlich zum einen in eine die Betätigungsmittel für die Freigabesteuerung umfassende Baueinheit sowie zum anderen eine die übrigen Bauteile umfassenden Baueinheit. Beide Baueineheiten sind dann durch Übertragungsmittel, beispielsweise einen Bowdenzug, ein Gurtband, eine Steuerstange oder auch pneumatisch oder hydraulisch miteinander wirkverbunden. Eine solche Ausführung hat den Vorteil, daß zum einen die Betätigungsmittel an quasi beliebiger Stelle des Sitzes angeordnet werden können, zum anderen aber die übrige Gurtbandlängeneinstelleinrichtung dort angeordnet werden kann, wo es beispielsweise von der Gurtbandführung oder Kraftwirkung besonders günstig ist.

Die Erfindung ist nachfolgend anhand eines in der Zeichnung dargestellten Ausführungsbeispiels näher erläutert. Es zeigen:
- Fig. 1: in stark vereinfachter Darstellung eine Vorderansicht des erfindungsgemäßen Kinderrückhaltesystems in teilweise Schnittdarstellung,
- Fig. 2: einen Längsschnitt durch das Kinderrückhaltesystem gemäß Fig. 1,
- Fig. 3: eine Rückansicht des Kinderrückhaltesystems nach Fig. 1,
- Fig. 4: in vergrößerter schematischer Darstellung eine Draufsicht auf die Gurtbandlängeneinstelleinrichtung des Kinderrückhaltesystems gemäß Fig. 1,
- Fig. 5: einen Längsschnitt durch die Gurtbandlängeneinstelleinrichtung nach Fig. 4 mit in Klemmstellung dargestellter Blockiereinrichtung und
- Fig. 6: einen Längsschnitt der Gurtbandlängeneinstelleinrichtung in Darstellung nach Fig. 5 in Freigabestellung.

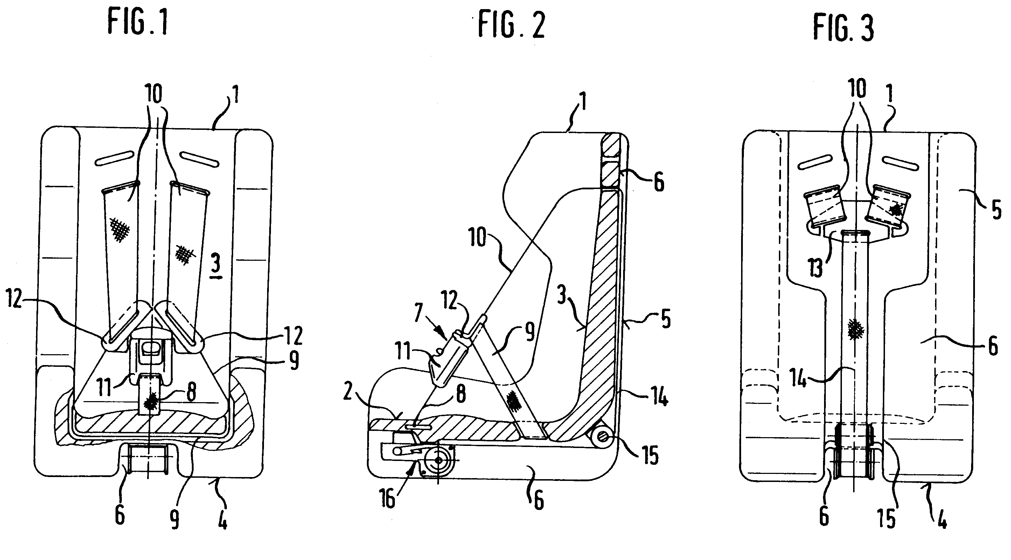

Das anhand der Figuren dargestellte Kinderrückhaltesystem weist einen Kindersitz 1 auf, der als Kunststoffschale ausgebildet ist und im Innenbreich, also im Bereich seiner Sitzfläche 2 sowie der Lehnfläche 3 in üblicher Weise der Anatomie eines Kindes entsprechend ausgeformt ist. Nach unten hin weist der Kindersitz 1 eine Standfläche 4, zur Rückseite eine Anlagefläche 5 auf. Mit diesen Flächen 4 und 5 stützt sich der Kindersitz 1 auf den Sitz- bzw. Lehnenpolster eines Kraftfahrzeugsitzes ab. Die Flächen 4 und 5 sind, wie es sich aus den Fig. 1 bis 3 ergibt, nicht vollflächig, sondern durch nach außen vorstehende Kufen gebildet, so daß zwischen dem eigentlichen Sitz 1 und dem (nicht dargestellten) Kraftfahrzeugsitz ein Freiraum 6 verbleibt. Der Kindersitz 1 ist zur Befestigung mit dem im Kraftfahrzeug befindlichen Zwei- oder Dreipunktgurt vorgesehen. Anstelle der dargestellten Vollschalenausbildung kann dieser auch aus dem eigentlichen Sitz und einem Traggestell bestehen, um beispielsweise die Schwenkbarkeit in eine Schlafposition zu ermöglichen.

An dem dargestellten Kindersitz 1 ist ein Fünfpunktgurtsystem mit zentralem Gurtschloß 7 angebracht; dieses Fünfpunktgurtsystem weist einen Schrittgurt 8, zwei Beckengurte 9 sowie zwei Schultergurte 10 auf. Der Schrittgurt 8 ist an einem Ende am Sitz, innerhalb der Sitzfläche 2, festgelegt, am anderen Ende ist das Schloßgehäuse 11 angebracht. Die Schultergurte 10 sind mittels zweier durch Einsteckteile 12 gebildete Schlitzführungen in die Beckengurte 9 überführt, die entweder mit ihren freien Enden sitzseitig festgelegt sind, oder aber wie in der vorliegenden Ausführungsform durchgehend und unter dem Sitz verbunden sind. Auf diese Weise bestehen Schultergurte 10 und Beckengurte 9 aus einem einzigen Gurtband, dessen Enden in zwei Schlitzen der Lehnfläche nach hinten durchgeführt und rückseitig an einem Knotenblech 13 festgelegt sind, von dem aus ein Gurtband 14 rückseitig bis nach unten und dort über eine Umlenkrolle 15 unter dem Sitz zu einer zentralen Gurtbandlängeneinstelleinrichtung 16 geführt ist.

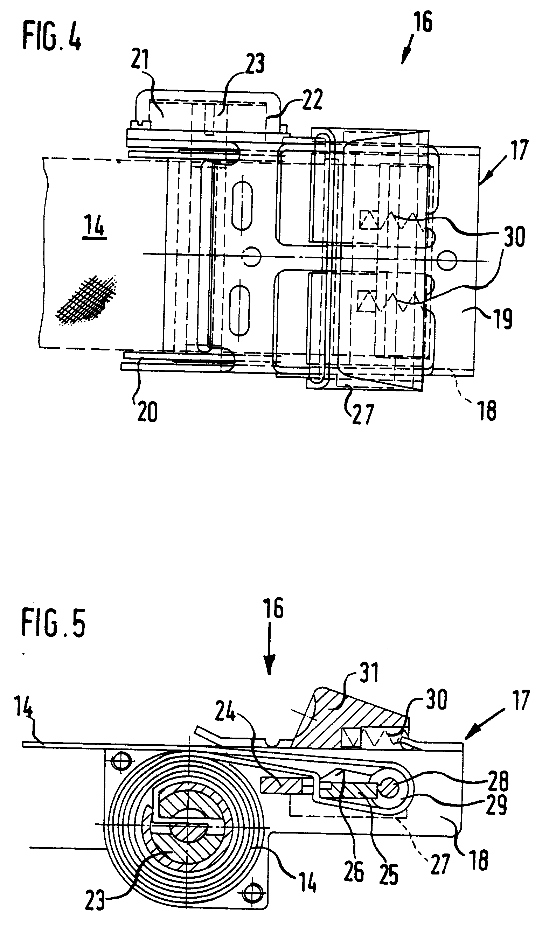

Die Gurtbandlängeneinstelleinrichtung 16, die anhand der Fig. 4 bis 6 dargestellt ist, ist in den Freiraum 6 an der Unterseite des Sitzes 1 angeordnet. Sie weist einen im Querschnitt U-förmigen Tragkörper 17 auf, der am Sitz 1 befestigt ist. Der Tragkörper 17 ist so angeordnet, daß seine Schenkel 18 nach unten weisen und sein Stegbereich 19 etwa parallel zur Sitzfläche 2 angeordnet ist.

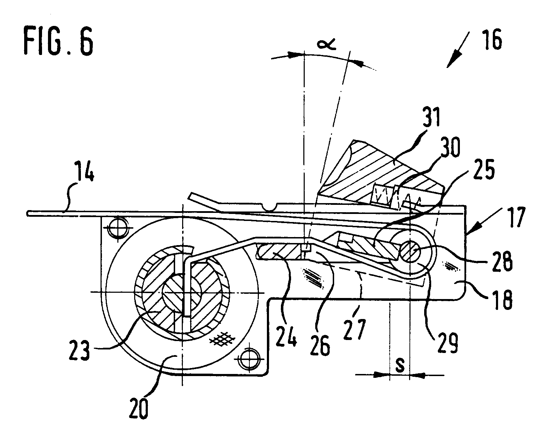

Zwischen den Schenkeln 18 ist eine Gurtbandwickelrolle 20 drehbar gelagert. Die Achse der Wickelrolle 20 sitzt auf einer Welle 23, die an einer Seite durch den Schenkel 18 hindurchgeführt und mit dem inneren Ende einer Rollfeder 21 verbunden ist, deren äußeres Ende am Tragkörper 17 festgelegt ist. Der Bereich dieses überstehenden Wellenendes sowie der Rollfeder 21 ist mit einem Gehäusedeckel 22 abgedeckt, der am entsprechenden Schenkel 18 des Tragkörpers 17 schraubbefestigt ist. Auf der Welle 23 ist ein Ende des Gurtbandes 14 festgelegt, dessen anderes Ende am Knotenblech 13 festgelegt ist. Anhand der Fig. 5 und 6 ist das in mehreren Lagen auf der Gurtbandwickelrolle 20 aufgewickelte Ende des Gurtbandes 14 erkennbar.

In Abwickelrichtung hinter der Gurtbandwickelrolle 20 ist eine Klemmeinrichtung angeordnet. Diese weist eine feststehende Klemmbacke 24 sowie eine bewegbar angeordnete Klemmbacke 25 auf, die an den zueinander weisenden Stirnseiten gegensinnig abgestuft ausgebildet sind, um das dadurch laufende Gurtband zuverlässig durch Klemmung festzulegen. Während die Klemmbacke 24 fest in einem Teil der Ausnehmung 26 jedes Schenkels 18 liegt, ist diese Ausnehmung 26 im Bereich der bewegbaren Klemmbacke 25 als Kurvenführung für diese Klemmbacke 25 ausgebildet. Die eigentliche Lagerung dieser Klemmbacke 25 erfolgt mittels eines den Tragkörper 17 in diesem Bereich übergreifenden U-förmigen Bauteiles 27, das verschiebbar auf dem Tragkörper 17 angeordnet ist. In den Seitenschenkeln dieses Bauteils 27 ist jedoch nicht nur die bewegliche Klemmbacke 25 mit der zur Klemmbacke 24 weisenden Stirnseite nach oben und unten bewegbar gelagert, sondern auch unmittelbar dahinterliegend eine Achse 28, welche auch die Ausnehmungen 26 in den Schenkeln 18 des Tragkörpers 17 durchsetzt und eine Umlenkrolle 29 trägt. Dadurch, daß die Ausnehmung 26 allseits geschlossen ist, ist der Verschiebeweg, um den das Bauteil 27 auf den Tragkörper 17 bewegbar ist, begrenzt, dieser Weg ist in Fig. 6 mit s dargestellt.

Das übergreifende Bauteil 27, dessen Bewegung durch die Ausnehmungen 26 in den Schenkeln 18 begrenzt ist, kann jedoch nicht nur um den Weg s verschoben werden, sondern zusätzlich auch noch um den Winkel α verschwenkt werden (siehe Fig. 6). Hierdurch ist es möglich, daß die bewegbare Klemmbacke 25 in der Freigabestellung (Fig. 6) der Klemmeinrichtung vollständig außer Eingriff mit dem Gurtband 14 kommt und somit ein reibungsarmer Durchgang gegeben ist.

Das übergreifende Bauteil 27 ist mittels zweier Druckfedern 30 gegenüber dem Tragkörper 17 in Klemmstellung festgelegt. Auf der Oberseite des Bauteils 27 ist eine Taste 31 vorgesehen, die fest mit diesem umgreifenden Bauteil 27 verbunden ist und die durch eine Ausnehmung unterhalb der Sitzfläche 2 im Sitz 1 von vorne zugänglich ist. Durch Druck auf diese Taste um den Weg s bei gleichzeitiger Schwenkbewegung um den Winkel α wird die Klemmeinrichtung entgegen Federkraft aus der das Gurtband 14 blockierenden Stellung (Fig. 5) in eine diese Klemmeinrichtung freigebende Stellung (Fig. 6) bewegt. Dann kann das Gurtband 14 entgegen Federkraft der Rollfeder 21 abgewickelt und auf diese Weise sowohl die Schultergurte 10 als auch die Beckengurte 9 verlängert werden.

In der Praxis wird nach einer solchen ersten Verlängerung der Gurte 9 und 10 das Kind im Sitz plaziert und das Gurtschloß 7 geschlossen werden. Dann kann durch nochmaligen Druck auf die Taste 31 das gesamte Gurtbandsystem durch Federkraft der Rollfeder 21 in seine bestimmungsgemäße Lage gebracht werden, wonach die Taste 31 losgelassen und das Gurtband 14 selbsttätig zwischen den Klemmbacken 24 und 25 festgelegt wird. Im Belastungsfall wird diese Klemmwirkung aufgrund der dann durch die Umlenkrolle auf die Klemmbacke 25 ausgeübten Kraft weiter verstärkt.

Anstelle der vorbeschriebenen feststehenden Klemmbacke 24 und bewegbaren Klemmbacke 25 kann es auch vorgesehen sein, diese Bewegungen durch entsprechende Kurvenbahnführungen so aufzuteilen, daß die Klemmbacke 24 mit ihrer zur Klemmbacke 25 gerichteten Stirnseite nach unten ausschwenkbar und die Klemmbacke 25 lediglich in Verschieberichtung bewegbar ist. Dann kann auf eine Schwenkbewegung des übergreifenden Bauteils 27 vollständig verzichtet werden. Die Klemmbacke 24 kippt dann beim Verschieben des übergreifenden Bauteils 27 in Öffnungsrichtung gewichtskraftunterstützt nach unten und gibt den Weg für das Gurtband 14 frei, während die bewegliche Klemmbacke 25 zusammen mit der Umlenkrolle 29 zurückgezogen wird.

## Patentansprüche

1. Kinderrückhaltesystem mit einem zur Befestigung in einem Fahrzeug vorgesehenen Kindersitz (1) und einem das Kind im Sitz (1) sichernden Drei- oder Mehrpunktgurtsystem mit einer an der Rück- oder Unterseite des Sitzes (1) angeordneten, eine Gurtbandwickelrolle (20) aufweisenden Gurtbandlängeneinstelleinrichtung (16), mit der die wirksame Länge mindestens eines Gurtteiles bei Betätigung einer Freigabesteuerung (27) entgegen Federkraft vergrößerbar oder mittels Federkraft verkleinerbar ist, dadurch gekennzeichnet, daß die Gurtbandlängeneinstelleinrichtung (16) eine in Abwickelrichtung hinter der Gurtbandwickelrolle (20) liegende Blockiereinrichtung (24, 25) für ein Gurtband (14) aufweist, daß die Gurtbandwickelrolle (20) in einem etwa U-förmigen, am Sitz festgelegten Tragkörper (17) gelagert ist und daß in den Schenkeln (18) dieses Tragkörpers (17) Ausnehmungen zur Aufnahme von Klemmbacken (24, 25) der Blockiereinrichtung und von einer Achse (28) einer Gurtbandumlenkrolle (29) vorgesehen sind, wobei eine der Klemmbacken (25) in bezug auf die andere Klemmbacke (24) beweglich angeordnet sowie in Klemmrichtung durch die Achse (28) der Umlenkrolle (29) kraftbeaufschlagbar ist und die bewegliche Klemmbacke (25) und die Achse (28) der Umlenkrolle (29) in der die Schenkel (18) des U-förmigen Tragkörpers (17) übergreifenden und darauf verschiebbar geführten, als Bauteil ausgebildeten Freigabesteuerung (27) gelagert sind.

2. Kinderrückhaltesystem nach Anspruch 1, dadurch gekennzeichnet, daß die Freigabesteuerung (27) mit der Blockiereinrichtung (24, 25) derart in Wirkverbindung steht, daß bei Betätigung von Betätigungsmitteln (31) nur die Blockiereinrichtung (24, 25) außer Funktion gesetzt ist.

3. Kinderrückhaltesystem nach Anspruch 1 oder 2, dadurch gekennzeichnet, daß das Gurtsystem zwei Schultergurte (10) aufweist, die rückseitig des Sitzes (1) zu einem gemeinsamen Gurtband (14) zusammengeführt sind und die über ein zentrales Gurtschloß (7) in Beckengurte (9) umgelenkt sind, die mit ihren freien Enden am Sitz (1) festgelegt oder unter dem Sitz miteinander verbunden sind, und daß die wirksame Länge des gemeinsamen Gurtbandes (14) mit der Gurtbandlängeneinstelleinrichtung (16) einstellbar ist.

4. Kinderrückhaltesystem nach einem der vorhergehenden Ansprüche, dadurch gekennzeichnet, daß die Gurtbandlängeneinstelleinrichtung (16) mit der Freigabesteuerung (27) und den zugehörigen Betätigungsmitteln (31) als Baueinheit ausgebildet und an der Unterseite des Sitzes (1) mit von vorne zugänglichen Betätigungsmitteln (31) angeordnet ist.

5. Kinderrückhaltesystem nach einem der vorhergehenden Ansprüche, dadurch gekennzeichnet, daß die Gurtbandlängeneinstelleinrichtung (16) aus im wesentlichen zwei Baueinheiten besteht, nämlich einer die Betätigungsmittel (31) für die Freigabesteuerung umfassenden Baueinheit sowie einer die übrigen Bauteile umfassenden Baueinheit, die durch Übertragungsmittel miteinander wirkverbunden sind.

6. Kinderrückhaltesystem nach einem der vorhergehenden Ansprüche, dadurch gekennzeichnet, daß die bewegliche Klemmbacke (25) in Klemmrichtung federkraftbeaufschlagt ist.

7. Kinderrückhaltesystem nach einem der Ansprüche 2 bis 6, dadurch gekennzeichnet, daß an dem den Tragkörper (17) übergreifenden Bauteil (27) das Betätigungsmittel (31) in Form einer Betätigungstaste angebracht ist, welche durch eine Aussparung im Sitz (1) und zwar unterhalb der Sitzfläche (2) von vorne zugänglich ist.

## Claims

1. A child restraint system with a child seat (1) envisaged for fastening in a vehicle and with a three-point or multi-point belt system, securing the child in the seat, with a belt strap length adjusting means (16) which is arranged on the rear side or the underside of the seat (1), which comprises a belt strap winding roller (20) and with which the effective length of at least one belt part on actuation of a release control (27) can be increased against a spring force or decreased by way of spring force, characterised in that the belt strap length adjusting means (16) comprises a blocking means (24, 25), for a belt strap (14), which lies behind the belt strap winding roller (20) in the direction of unwinding, that the belt strap winding roller (20) is mounted in a roughly U-shaped carrier (17) fixed on the seat and that in the arms (18) of this carrier (17) there are provided recesses for receiving clamping jaws (24, 25) of the blocking means and an axle (28) of a belt strap deflecting roller (29), wherein one of the clamping jaws (25) is arranged movable with respect to the other clamping jaw (24) as well as being impingable by force in the clamping diretion by the axle (28) of the deflecting roller (29), and the movable clamping jaw (25) and the axle (28) of the deflecting roller (29) are mounted in the release control (27) formed as a component, which laps over the arms (18) of the U-shaped carrier (17) and is displaceably guided thereon.

2. A child restraint system according to claim 1, characterised in that the release control (27) is connected in an operating manner to the blocking means (24, 25) such that on actuation of actuating means (31) only the blocking means (24, 25) are put out of function.

3. A child restraint system according to claim 1 or 2, characterised in that the belt system comprises two shoulder belts (10) which are guided together to a common belt strap (14) on the rear side of the seat (1) and which via a central belt lock (7) are deflected into waist belts (9) which with their free ends are fastened to the seat (1) or are connected to one another under the seat, and that the effective length of the common belt strap (14) can be adjusted with the belt strap length adjusting means (16).

4. A child restraint system according to one of the preceding claims, characterised in that the belt strap length adjusting means (16) is formed as a constructional unit with the release control (27) and the associated actuating means (31) and is arranged on the underside of the seat with actuation means (31) which are accessible from the front.

5. A child restraint system according to one of the preceding claims, characterised in that the belt strap length adjusting means (16) consists essentially of two constructional units, specifically a constructional unit comprising the actuation means (31) for the release control as well as a constructional unit comprising the remaining components, these being connected to one another in an operating manner via transmission means.

6. A child restraint system according to one of the preceding claims, characterised in that the movable clamping jaw (25) is impinged by spring force in the clamping direction.

7. A child restraint system according to one of claims 2 to 6, characterised in that on the component (27) lapping over the carrier (17) there is attached the actuation means (31) in the form of an actuating button which is accessible from the front by way of a relief in the seat (1), this being below the seating surface (2).

## Revendications

1. Système de retenue pour enfant comportant un siège (1) pour enfant, qui est destiné à être fixé dans un véhicule, et un système de ceinture à trois points ou à plusieurs points, qui retient l'enfant sur le siège (1) et possédant un dispositif (16) de réglage de la sangle de ceinture, qui est disposé sur la face arrière ou la face inférieure du siège (1), et possède un rouleau (20) d'enroulement de la sangle et à l'aide duquel la longueur active d'au moins une partie de la sangle peut être accrue lors de l'actionnement d'une unité de commande de libération (27) à l'encontre de la force d'un ressort ou peut être réduite à l'aide de la force d'un ressort, caractérisé en ce que le dispositif (16) de réglage de la longueur de la sangle comporte un dispositif de blocage (24,25) pour une sangle (14), qui est situé en aval du rouleau (20) d'enroulement de la sangle dans la direction de déroulement, en ce que le rouleau (20) d'enroulement de la sangle est monté dans un corps de support (17) approximativement en forme de U, fixé au siège, et en ce que dans les branches (18) de ce corps de support (17) sont prévus des évidements servant à loger des mâchoires de blocage (24,25) du dispositif de serrage et à loger un axe (28) d'un rouleau (29) de déviation de la sangle, l'une des mâchoires de blocage (25) étant disposée de manière à être mobile par rapport à l'autre mâchoire de serrage (24) et pouvant être chargée par une force dans le sens de serrage, au moyen de l'axe (28) du rouleau de renvoi (29), tandis que la mâchoire de blocage mobile (25) et l'axe (28) du rouleau de renvoi (29) sont montés dans l'unité de commande de libération (27) agencée en tant que composant qui s'engage par-dessus les branches (18) du corps de support en forme de U (17) et est guidé de manière à être déplaçable sur cette branche.

2. Système de retenue pour enfant selon la revendication 1, caractérisé en ce que l'unité de commande de libération (26) coopère avec le dispositif de blocage (24,25) de telle sorte que, lors de l'actionnement de moyens d'actionnement (31), seul le dispositif de blocage (24,25) est mis hors service.

3. Système de retenue pour enfant selon la revendication 1 ou 2, caractérisé en ce que le système de ceinture comporte deux ceintures baudrier (10), qui sont réunies, sur le côté arrière du siège (1) pour former une sangle commune (14), et qui sont déviés par l'intermédiaire d'une boucle centrale de ceinture (7) en formant les sangles abdominales (9), dont les extrémités libres sont fixées au siège (1) et qui sont reliées entre elles au-dessous du siège, et en ce que la longueur active de la sangle commune (14) est réglable à l'aide du dispositif (16) de réglage de la longueur de la sangle.

4. Système de retenue pour enfant selon l'une des revendications précédentes, caractérisé en ce que le dispositif (16) de réglage de la longueur de la sangle est agencé avec l'unité de commande de libération (27) et des moyens d'actionnement associés (31) sous la forme d'une unité de construction et est disposé sur la face inférieure du siège (1), avec des moyens d'actionnement (31) qui sont accessibles de l'avant.

5. Système de retenue pour enfant selon l'une des revendications précédentes, caractérisé en ce que le dispositif (16) de réglage de la longueur de la sangle est constitué essentiellement de deux unités de construction, à savoir une unité de construction comprenant les moyens d'actionnement (31) pour l'unité de commande de libération ainsi qu'une unité de construction comprenant les autres composants, et qui coopèrent entre elles à l'aide de moyens de transmission.

6. Système de retenue pour enfant selon l'une des revendications précédentes, caractérisé en ce que la mâchoire de serrage mobile (25) est chargée par la force d'un ressort dans le sens du serrage.

7. Système de retenue pour enfant selon l'une des revendications 2 à 6, caractérisé en ce que le moyen d'actionnement (31) est disposé sur le composant (27) qui s'engage au-dessus du corps de support (17), sous la forme d'une touche de fonctionnement, qui est accessible, à partir de l'avant, par un évidement formé dans le siège (1), et ce au-dessous de la surface d'assise (2).
